# EUROPÄISCHE PATENTANMELDUNG

(11) **EP 2 829 691 A1**
(43) Veröffentlichungstag der Anmeldung: **28.01.2015**
(21) Anmeldenummer: 13177932.4
(22) Anmeldetag: 25.07.2013
(51) Int. Cl.: F01K 7/24, F01K 23/10, F22B 1/18

(54) **Verfahren zum Betreiben einer GuD-Anlage**

(71) Anmelder: Siemens Aktiengesellschaft, 80333 München (DE)
(72) Erfinder: Gobrecht, Edwin, 40885 Ratingen (DE); Heue, Matthias, 44879 Bochum (DE)

(57) **Zusammenfassung**

Die Erfindung betrifft ein Verfahren zum Betreiben einer GuD-Anlage, wobei die Dampfturbine (25) kurz vor dem geplanten Anfahren einer Parklast auf eine sehr kleine Leistung abgesenkt wird, wobei die Gasturbine (2) anschließend in Parklast gefahren wird und die Dampfturbine (25) anschließend auf eine Parkleistung hochgefahren wird.

Die GT-Betriebsleistung kann hierbei die Nennleistung der Gasturbine sein. Die ST-Betriebsleistung kann hierbei die Nennleistung der Dampfturbine sein.

## Beschreibung

Die Erfindung betrifft ein Verfahren zum Betreiben einer GuD-Anlage, wobei die Gasturbine bei einer GT-Betriebsleistung und die Dampfturbine bei einer ST-Betriebsleistung betrieben wird, wobei die Leistung der Dampfturbine auf eine ST-Teilleistung verringert wird, wobei die ST-Teilleistung kleiner als die ST-Betriebsleistung ist.

GuD-Kraftwerke werden zur Erzeugung von elektrischer Energie für die kommunale Energieversorgung eingesetzt. In der Regel versorgt ein GuD-Kraftwerk ein Versorgungsnetz mit elektrischer Energie, wobei der Energiebedarf abhängig ist vom Zeitverlauf. Das bedeutet, dass der Energiebedarf über den Tagesverlauf nicht konstant ist. Das elektrische Versorgungsnetz wird mit mehreren Kraftwerken mit elektrischer Energie versorgt. So kommen bspw. konventionelle Kraftwerke und Kraftwerke zum Einsatz, die erneuerbare Energien in elektrische Energie umwandeln. Die Einspeisung der erneuerbaren Energien ist Schwankungen unterworfen, was zu zunehmenden Anforderungen an die konventionellen Kraftwerke führt. Das bedeutet, dass konventionelle Kraftwerke länger und tiefer in sogenannten Teillasten bzw. Parklasten betrieben werden müssen. In Gas- und Dampfturbinenkraftwerken sind derartige tiefe Teillasten je nach Konfiguration der Gasturbine mit reduzierten Gasturbinen-Austrittstemperaturen verbunden.

Das führt dazu, dass auch die Dampfturbinen-Eintrittstemperatur absinkt. Somit wird, sobald die Anlage in Teillast gefahren wird, die Dampf-Eintrittstemperatur abgesenkt. Dies führt allerdings dazu, dass die heißen Bauteile der Dampfturbine mit kaltem Dampf beaufschlagt werden, was zu thermischen Spannungen führt.

Wenn dann die Parklast wieder verlassen wird, steigen die Dampftemperaturen wieder an, was wiederum zu thermischen Spannungen führt. Um diesen thermischen Spannungen vorzubeugen, gibt es die Möglichkeit, die Gasturbine nicht so weit in Teillast zu fahren, damit die Dampftemperatur nicht so stark absinkt. Ebenfalls ist es möglich, die Dampftemperatur durch Abspritzung vor der eigentlichen Lastreduzierung langsam zu reduzieren. Anschließend erfolgt die Laständerung bei tiefer, aber dafür konstanter Temperatur. Nach dem Steigern der Last wird die Dampftemperatur wieder langsam auf Nenntemperatur angehoben.

Eine weitere Möglichkeit thermischen Spannungen vorzubeugen, besteht darin, die Dampfturbine vor dem Absenken der Gasturbinenleistung abzufahren. Die Bauteile der Dampfturbine werden dann bei sehr geringen thermischen Spannungen auskühlen. Sobald die Bauteile weit genug abgekühlt sind, könnte die Dampfturbine bei einer reduzierten Gasturbinenleistung und somit bei einer tiefen Dampf-Eintrittstemperatur wieder angefahren werden. Dies würde zu einem sehr niedrigen Lebensdauerverbrauch führen.

Die Erfindung hat es sich zur Aufgabe gemacht, eine weitere Möglichkeit anzugeben, thermische Spannungen zu reduzieren.

Die Aufgabe wird gelöst durch ein Verfahren zum Betreiben einer GuD-Anlage, wobei die Gasturbine bei einer GT-Betriebsleistung und die Dampfturbine bei einer ST-Betriebsleistung betrieben wird, wobei die Leistung der Dampfturbine auf eine ST-Teilleistung verringert wird, wobei die ST-Teilleistung kleiner als die ST-Betriebsleistung ist, wobei anschließend die Leistung der Gasturbine auf eine GT-Parkleistung verringert wird, wobei die GT-Parkleistung kleiner ist als die GT-Betriebsleistung.

Somit wird erfindungsgemäß vorgeschlagen, eine Fahrweise anzugeben, wobei die Dampfturbine an der Parklast beteiligt wird. Somit wird im Sinne der Netzstabilität möglichst viel drehende Masse durch den Dampfturbinenrotor am Netz gehalten.

Die ST-Leistung der Dampfturbine wird kurz vor dem geplanten Anfahren der Parklast auf eine sehr kleine Leistung abgesenkt. Anschließend wird die Gasturbine in Parklast gefahren. Aufgrund der bei Teillast deutlich geringeren Wärmeübergänge zwischen Dampf- und Dampfturbinen-Bauteilen ist der Lebensdauerverbrauch durch das Absinken der Dampftemperatur deutlich geringer. Dabei kühlt die Dampfturbine langsam aus.

Vorteilhafte Weiterbildungen sind in den Unteransprüchen angegeben. So wird in einer ersten vorteilhaften Weiterbildung die ST-Teilleistung bei 5% bis 40%, 5% bis 30%, 5% bis 20%, aber 5% bis 10% der ST-Betriebsleistung festgelegt.

In einer weiteren vorteilhaften Weiterbildung liegt die GT-Parkleistung bei 20% bis 60 % der Gasturbinen-Betriebsleistung.

Besonders vorteilhaft wird nach Erreichen der GT-Parkleistung der Gasturbine die Leistung der Dampfturbine auf eine ST-Parkleistung hochgefahren, wobei die ST-Parkleistung bei 20% bis 60% der ST-Betriebsleistung liegt.

Somit wird vorgeschlagen, nachdem die Dampfturbine langsam auskühlt bei einer reduzierten Gasturbinenleistung und dadurch tiefe Dampf-Eintrittstemperatur wieder Last aufzunehmen.

In einer alternativen Ausführungsform könnte die Dampfturbine bis zur Beendigung der Parklast in dieser tiefen Teillast gehalten werden.

Erfindungsgemäß wird somit vorgeschlagen, die Leistung der Dampfturbine auf eine ST-Teilleistung zu verringern. Die ST-Teilleistung ist kleiner als die ST-Betriebsleitung. Das Verringern auf die ST-Teilleistung erfolgt durch Schließen eines Dampf-Eintrittsventils. Das Dampf-Eintrittsventil wird dabei derart angesteuert, dass kaum Frischdampf durch die Dampfturbine strömt. Dabei wird eine Umleitstation derart ausgebildet, dass eine strömungstechnische Verbindung zwischen dem Dampfeintritt und dem Kondensator entsteht. Somit wird Dampf nach dem Dampferzeuger nicht zur Dampfturbine geführt, sondern direkt zum Kondensator, was sich nachteilig auf den Wirkungsgrad auswirkt. Die Dampfturbine kühlt dabei aus. Anschließend wird die Leistung der Gasturbine auf eine GT-Parkleistung verringert. Dies hat Auswirkungen auf die Dampf-Eintrittstemperatur. Das bedeutet, dass die Dampf-Eintrittstemperatur geringer wird. Nach einer gewissen Zeit wird anschließend das Dampf-Eintrittsventil wieder geöffnet und die strömungstechnische Verbindung zwischen Dampfeintritt und dem Kondensator unterbrochen. Somit wird dann der gesamte im Dampferzeuger erzeugte Dampf durch die Dampfturbine geführt.

In einer vorteilhaften Weiterbildung umfasst die Dampfturbine eine Hochdruck-, Mitteldruck- und Niederdruck-Teilturbine, wobei die Hochdruck-Teilturbine, die Hochdruck-Teilturbine und die Mitteldruck-Teilturbine, die Mitteldruck-Teilturbine, die Mitteldruck-Teilturbine und die Niederdruck-Teilturbine oder die Niederdruck-Teilturbine nicht mit Dampf beaufschlagt wird.

Somit wird idealerweise eine Druckstufe komplett geschlossen. Im abgeschalteten Teilturbinenteil ist der Lebensdauerverbrauch noch geringer, da hier die Bauteile natürlich auskühlen. Vorteilhafterweise wird der Druck in der Dampfturbine bzw. der in Betrieb verbleibenden Turbinenteile möglichst weit abgesenkt, was durch Entwässerungen, Evakuierungsleitungen, Anfahrleitungen oder auch Prozessdampfleitungen ermöglicht wird.

Somit wird durch das deutliche Absenken des Druckes in der Dampfturbine der Wärmeübergang gesenkt und der Lebensdauerverbrauch bei Teillast deutlich verringert.

Die Erfindung wird nun anhand eines Ausführungsbeispiels näher erläutert. Darin zeigt:

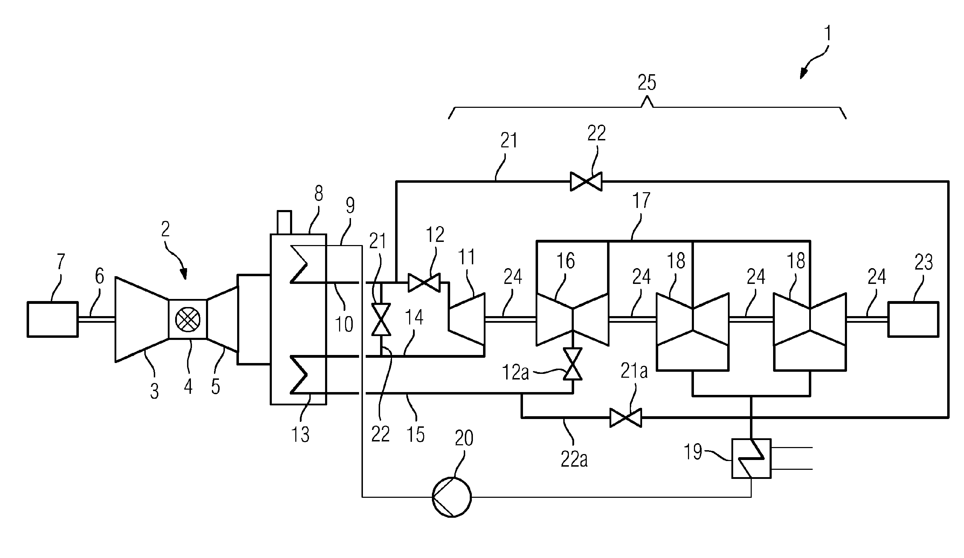

- Figur 1: eine schematische Darstellung eines GuD-Kraftwerks.

Die Figur 1 zeigt eine schematische Darstellung eines Gas-und Dampfturbinenkraftwerkes (GuD-Kraftwerk). Im Wesentlichen umfasst ein GuD-Kraftwerk 1 eine mit fossilen Brennstoffen antreibbare Gasturbine 2. Diese Gasturbine 2 umfasst ein Verdichterteil 3 in dem Luft erwärmt und verdichtet wird, eine Brennkammer 4 in der die Luft aus dem Verdichterteil 3 mit Brennstoff vermischt und gezündet wird und ein Turbinenteil 5 in dem die heißen Abgase in verschiedenen Stufen, die aus nicht-dargestellten Leit- und Laufschaufeln bestehen, einen Rotor in eine Rotation versetzen. Diese Rotation wird über eine Welle 6 an einem Generator 7 übertragen. Der Generator 7 versorgt anschließend ein Versorgungsnetz mit elektrischer Energie (nicht dargestellt).

Die heißen Abgase der Gasturbine 2 werden in einen Dampferzeuger 8 geführt. In diesem Dampferzeuger 8 mittels einer Leitung 9 Frischdampf erzeugt und über eine Dampfturbinen-Frischdampfleitung 10 schließlich in eine Hochdruck-Teilturbine 11 geführt. In der Dampfturbinen-Frischdampfleitung 10 ist ein HD-Ventil 12 angeordnet. Der aus der HD-Teilturbine 11 ausströmende Dampf wird zu einem Zwischenüberhitzer 13 geführt. Dies erfolgt über die kalte Zwischenüberhitzerleitung 14. Nach Erhitzung des Dampfes im Zwischenüberhitzer 13 wird über die heiße Zwischenüberhitzerleitung 15 eine Mitteldruck-Teilturbine 16 mit Dampf versorgt. Aus der Mitteldruck-Teilturbine 16 strömt der Dampf über eine Überströmleitung 17 in zwei Niederdruck-Teilturbinen 18. Nach der Niederdruck-Teilturbine 18 strömt der kalte und entspannte Dampf in einen Kondensator 19 und kondensiert dort zu Wasser, das über eine Pumpe 20 wieder über die Frischdampfleitung 9 in den Frischdampferzeuger 8 geführt wird.

Die Dampfturbinen-Frischdampfleitung 10 ist über eine Umleitstation 21 direkt mit dem Kondensator 19 strömungstechnisch verbunden. In der Überströmleitung 21 ist ein Überströmventil 22 angeordnet. Ein elektrischer Generator 23 ist über eine gemeinsame Welle 24 drehmomentübertragend mit der Hochdruck-Teilturbine 11, der Mitteldruck-Teilturbine 16 und der Niederdruck-Teilturbine 18 verbunden. Die HD-Teilturbine 11, die MD-Teilturbine 16 und die ND-Teilturbinen 18 bilden die Dampfturbine 25.

In einer alternativen Ausführungsform umfasst das Gas- und Dampfturbinenkraftwerk ein Umleitsystem. Dieses Umleitsystem umfasst eine Hochdruck-Umleitstation 22 und ein in der Hochdruck-Umleitstation 22 angeordnetes Hochdruck-Umleitventil 21, wobei mit der Hochdruck-Umleitstation 22 eine strömungstechnische Verbindung zwischen der Dampfturbine-Frischdampfleitung 10 und der kalten Zwischenüberhitzerleitung 14 erfolgt. Ferner umfasst das Umleitsystem eine Mitteldruck-Umleitstation 22a und ein in der Mitteldruck-Umleitstation 22a angeordnetes Mitteldruck-Umleitventil 21a, wobei mit der Mitteldruck-Umleitstation 22a eine strömungstechnische Verbindung zwischen der heißen Zwischenüberhitzerleitung 15 und dem Kondensator 19 erfolgt.

Somit kann Dampf über das die Hochdruck-Umleitstation 22 und Mitteldruck-Umleitstation 22a umfassenden Umleitsystems von der Dampfturbinen-Frischdampfleitung 10 zum Kondensator 19 gelangen.

Ferner umfasst das Gas- und Dampfturbinenkraftwerk ein in der heißen Zwischenüberhitzerleitung 15 angeordnetes Mitteldruck-Ventil 12a.

Die GuD-Anlage wird nun folgendermaßen erfindungsgemäß betrieben. Die Gasturbine 2 wird zunächst bei einer Gasturbinen-Betriebsleitung betrieben. Ebenso wird die Dampfturbine 25 bei einer ST-Betriebsleitung betrieben. Die Leistung der Dampfturbine 25 wird auf eine ST-Teilleistung verringert, wobei die ST-Teilleistung kleiner ist als die ST-Betriebsleistung. Die ST-Teilleistung liegt dann hierbei bei 5% bis 40%, 5% bis 30%, 5% bis 20% oder 5% bis 10% der ST-Betriebsleistung.

Dies wird dadurch erreicht, dass das HD-Ventil 12 und das Mitteldruck-Ventil 12a nahezu geschlossen werden, so dass kaum Dampf durch die Dampfturbine 25 strömt. Somit kühlen die Bauteile in der Dampfturbine 25 ab. Nach einer gewissen Verweildauer wird anschließend die Leistung der Gasturbine 2 auf eine GT-Parkleistung verringert, wobei die GT-Parkleistung kleiner ist als die GT-Betriebsleistung. Die GT-Parkleistung liegt hierbei bei 20% bis 60% der Gasturbinen-Betriebsleistung. Dies führt dazu, dass die Temperatur des heißen Abgases der Gasturbine 2 geringer ist, was zu einer Verringerung der im Dampferzeuger 8 erzeugten Temperatur des Frischdampfes ist, der durch die Dampfturbinen-Frischdampfleitung 10 und die heiße Zwischenüberhitzerleitung 15 führt.

Nachdem das HD-Ventil 12 nahezu geschlossen wird, wird das Überströmventil 22 bzw. das Umleitsystem 22, 21; 22a, 21a geöffnet, so dass der Großteil des im Dampferzeuger 8 erzeugten Dampfes direkt in den Kondensator 19 geführt wird. Dies ist allerdings nachteilig für den Gesamtwirkungsgrad der GuD-An-lage.

Nach Erreichen der GT-Parkleistung der Gasturbine 2 wird die Leistung der Dampfturbine 25 auf eine ST-Parkleistung hochgefahren. Diese ST-Parkleistung liegt bei 20% bis 60% der ST-Betriebsleitung. Dies wird dadurch erreicht, dass das HD-Ventil 12 und das Mitteldruck-Ventil 12a geöffnet werden. Das Überströmventil 22 in der Überströmleitung 21 wird wieder geschlossen. Somit kann der nunmehr infolge der geringeren Dampf-Eintrittstemperatur des Dampfes in der Dampfturbinen-Frischdampfleitung 10 und in der heißen Zwischenüberhitzerleitung 15 geführte Dampf in die HD-Teilturbine 11 geführt werden. Infolge der niedrigeren Frischdampftemperatur ist der Volumenstrom des Frischdampfes auch geringer.

Die Verringerung der Leistung der Dampfturbine 25 wird durch ein Verringern des Druckes des Dampfes erreicht. Es kann nun, nachdem die ST-Teilleistung und die GT-Parkleistung erreicht wurden, die Dampfturbine 25 folgendermaßen betrieben werden. Die Dampfturbine 25 umfasst eine Hochdruck-Teilturbine 11, eine Mitteldruck-Teilturbine 16 und eine Niederdruck-Teilturbine 18, wobei die Hochdruck-Teilturbine 11, die Hochdruck-Teilturbine 11 und die Mitteldruck-Teilturbine 16, die Mitteldruck-Teilturbine 16, die Mitteldruck-Teilturbine 16 und die Niederdruckteilturbine 18 oder die Niederdruck-Teilturbine 18 nicht mit Dampf beaufschlagt wird. Die restlichen Teilturbinen bleiben geschlossen und können natürlich auskühlen.

Der Druck des Dampfes in den nicht mit Dampf beaufschlagten Teilturbinen wird dann möglichst weit abgesenkt. Dazu werden Entwässerungen, Evakuierungsleitungen, Anfahrleitungen oder Prozessdampfleitungen geöffnet.

## Patentansprüche

1. Verfahren zum Betreiben einer GuD-Anlage,
wobei die Gasturbine (2) bei einer GT-Betriebsleistung und die Dampfturbine (25) bei einer ST-Betriebsleistung betrieben wird,
wobei die Leistung der Dampfturbine (25) auf eine ST-Teilleistung verringert wird,
wobei die ST-Teilleistung kleiner als die ST-Betriebsleistung ist,
wobei anschließend die Leistung der Gasturbine (2) auf eine GT-Parkleistung verringert wird, wobei die GT-Parkleistung kleiner ist als die GT-Betriebsleistung.

2. Verfahren nach Anspruch 1,
wobei die ST-Teilleistung bei 5% - 40%, 5% - 30%, 5% - 20% oder 5% - 10% der ST-Betriebsleistung liegt.

3. Verfahren nach Anspruch 1 oder 2,
wobei die GT-Parkleistung bei 20% - 60% der GT-Betriebsleistung liegt.

4. Verfahren nach einem der vorhergehenden Ansprüche,
wobei nach Erreichen der GT-Parkleistung der Gasturbine (2) die Leistung der Dampfturbine (25) auf eine ST-Parkleistung hochgefahren wird.

5. Verfahren nach Anspruch 4,
wobei die ST-Parkleistung bei 20% - 60% der ST-Betriebsleistung liegt.

6. Verfahren nach einem der vorhergehenden Ansprüche,
wobei die Verringerung der Leistung der Dampfturbine (25) durch ein Verringern des Druckes des Dampfes erfolgt.

7. Verfahren nach Anspruch 5,
wobei die Dampfturbine (25) eine HD- (11), MD- (16) und ND-Teilturbine (18) umfasst und
die HD-Teilturbine (11), die HD-Teilturbine (11) und die MD-Teilturbine (16), die MD-Teilturbine (16), die MD-Teilturbine (16) und die ND-Teilturbine (18) oder die ND-Teilturbine (18) nicht mit Dampf beaufschlagt wird.

8. Verfahren nach Anspruch 6,
wobei der Druck des Dampfes in den nicht mit Dampf beaufschlagten Teilturbinen möglichst weit abgesenkt wird.

9. Verfahren nach Anspruch 7,
wobei die Entwässerung, Evakuierungsleitungen, Anfahrleitungen oder Prozessdampfleitungen geöffnet werden.
